Europäisches Patentamt

European Patent Office

Office européen des brevets

(11) Veröffentlichungsnummer: **0 021 078**
**B1**

(12) # EUROPÄISCHE PATENTSCHRIFT

(45) Veröffentlichungstag der Patentschrift:
12.10.83

(51) Int. Cl.³: **C 09 D 3/68, C 08 L 67/06**

(21) Anmeldenummer: 80102945.5

(22) Anmeldetag: 27.05.80

(54) **Verfahren zur Herstellung dünnschichtiger Polyesterüberzüge.**

(30) Priorität: 08.06.79 DE 2923338

(43) Veröffentlichungstag der Anmeldung:
07.01.81 Patentblatt 81/1

(45) Bekanntmachung des Hinweises auf die Patenterteilung:
12.10.83 Patentblatt 83/41

(84) Benannte Vertragsstaaten:
AT BE CH DE FR GB IT LI NL SE

(56) Entgegenhaltungen:
DE-A-1 645 130
DE-B-2 046 575
GB-A-995 271
GB-A-1 007 834
GB-A-1 048 060

(73) Patentinhaber: **BAYER AG, Zentralbereich Patente, Marken und Lizenzen, D-5090 Leverkusen 1, Bayerwerk (DE)**

(72) Erfinder: **Frank, Walter, Ing.-grad., Doerperhofstrasse 14, D-4150 Krefeld (DE)**
Erfinder: **Bendszus, Otto, Ing.-grad., Breitestrasse 92, D-4150 Krefeld (DE)**
Erfinder: **Freier, Hansjoachim, Dr., Campendonkstrasse 5, D-4150 Krefeld (DE)**
Erfinder: **Traenckner, Hans-Joachim, Dr., Wedelstrasse 46, D-4150 Krefeld (DE)**

Verfahren zur Herstellung dünnschichtiger Polyesterüberzüge

Die Erfindung betrifft ein Verfahren zur Herstellung dünnschichtiger Überzüge durch Polymerisation von wässrigen monomerfreien Dispersionsfilmen auf Basis lufttrocknender ungesättigter Polyester in Gegenwart von Beschleunigern, aber in Abwesenheit üblicher externer Polymerisationsinitiatoren.

Bei den bislang üblichen Beschichtungen auf der Grundlage ungesättigter Polyester geht man in der Regel von ungesättigten Polyesterharzen, d.h. Gemischen $\alpha,\beta$-ethylenisch ungesättigter Polyester und damit copolymerisierbarer Monomerer, aus.

Das in solchen Lacken als Monomeres fast ausschliesslich verwendete Styrol copolymerisiert bei der Filmhärtung mit den ungesättigten Polyestern, so dass im Vergleich zu Nitrolackbeschichtungen vernetzte, also unlösliche, Lakkierungen mit hohem Gebrauchswert entstehen. Verdunstungsverluste an monomerem Styrol während der Verarbeitung, z.B. auf der Giessmaschine und zu Beginn der Filmhärtung, sind dabei jedoch unvermeidbar. Ihre Entfernung aus der Abluft der Fabrikationshallen und Trockenanlagen ist wegen der enormen umzuwälzenden Luftmengen sehr kostspielig.

Zur Initierung der Polymerisationsreaktion ist eine Vielzahl von Verbindungen vorgeschlagen worden, deren Wirkung darin besteht, dass sie bei Energiezufuhr durch Erwärmen oder Bestrahlung in reaktive Radikale zerfallen, worauf diese ihrerseits die Polymerisation als Radikalkettenreaktion starten. Die gebräuchlichsten Polymerisationsinitiatoren sind Verbindungen mit einer Peroxidgruppe; ihr Vorteil besteht darin, dass sie von sogenannten Beschleunigern, wie z.B. bestimmten Metallverbindungen oder tertiären aromatischen Aminen, bereits bei Raumtemperatur zum spontanen Zerfall angeregt werden können.

Die Verarbeitung von Peroxiden ist physiologisch nicht unbedenklich, und ihre Handhabung erfordert daher sorgfältige Schutzmassnahmen. Unproblematischer betreffend Hautreizung und Explosionsgefahr sind die Peroxidgruppenfreien Photoinitiatoren, ihre Verwendung erfordert jedoch wegen den notwendigen Bestrahlungsapparaturen einen hohen technischen Aufwand.

Aufgabe der vorliegenden Erfindung war es, ein Verfahren zur Herstellung von Überzügen auf Basis ungesättigter Polyester für besonders dünne Beschichtungen besonders auf Holz, holzähnlichen Stoffen oder Holzimitationen bereitzustellen, das die oben genannten Nachteile nicht aufweist.

Überraschenderweise wurde nun gefunden, dass monomerfreie wässrige Dispersionen spezieller lufttrocknender ungesättigter Polyester in Gegenwart von Beschleunigern, aber in Abwesenheit üblicher Initiatoren zu dünnen Überzügen gehärtet werden können.

Gegenstand der Erfindung ist also ein Verfahren zur Herstellung dünnschichtiger Überzüge aus monomerfreien wässrigen Polyesterdispersionen, die frei von organischen Lösungsmitteln sind, dadurch gekennzeichnet, dass der Polyesterbestandteil der Dispersion aus

a. 50–95 Gew.-%, bezogen auf die Summe von a und b, mindestens eines $\alpha,\beta$-ethylenisch ungesättigten Polyesters, der pro 100 g Polyester a 0,2–0,8 Mol $\beta,\gamma$-ethylenisch ungesättigte Ethergruppen, aber keine einkondensierten Polyalkylenglykolreste mit Molekulargewichten von 250–2000 enthält, und

b. 5–50 Gew.-%, bezogen auf die Summe von a und b, mindestens eines $\alpha,\beta$-ethylenisch ungesättigten Polyesters enthält, der zu 25–90 Gew.-%, bezogen auf b., aus einkondensierten Polyalkylenglykolreste eines Molekulargewichts von 250–2000 besteht und pro 100 g Polyester b i) 0,4–0,5 Mol $\beta,\gamma$-ethylenisch ungesättigte Ethergruppen oder ii) 0,02 bis 0,2 Mol gesättigte aliphatische Endgruppen, die Reste von Monocarbonsäuren und/oder monofunktionellen Alkoholen sind, enthält und dass man in Gegenwart von Beschleunigern, aber in Abwesenheit üblicher externer Polymerisationsinitiatoren polymerisiert.

«Monomerfrei» bedeutet erfindungsgemäss: frei von Monomeren, die mit dem ungesättigten Polyester copolymerisierbar wären.

Unter «üblichen externen Polymerisationsinitiatoren» sollen diejenigen Verbindungen verstanden werden, die zwecks Polymerisationsinitiierung gezielt zugegeben werden. Übliche externe Polymerisationsinitiatoren sind in Wagner/ Sarx, Lackkunstharze, Kapitel: Ungesättigte Polyesterharze, 5. Aufl., Carl Hanser Verlag, Stuttgart 1971, beschrieben. Beispiele üblicher externer Polymerisationsinitiatoren sind Diacylperoxide wie Diacetylperoxid, Dibenzoylperoxid, Dip-chlorbenzoylperoxid, tert.-Butylperoxid, Peroxyester wie tert.-Butylperoxyacetat, tert.-Butylperoxybenzoat, tert.-Butylperoctoat, Dicyclohexylperoxydicarbonat oder 2,5-Dimethylhexan-2,5-diperoctoat, Alkylperoxide wie Bis-(tert.-butylperoxybutan), Dicumylperoxid, tert.-Butylcumylperoxid, Hydroperoxide wie Cumolhydroperoxid, tert.-Butylhydroperoxid, Cyclohexanonhydroperoxid, Methylethylketonhydroperoxid, Perketale, Acetylacetonperoxid, Azoisobutylrodinitril und Wasserstoffperoxid; Photoinitiatoren wie Benzoine und Benzoinether, 1,1,2,2-Tetraaryl-1,2-dihydroxiethane, ihre Alkyl- und Silylether (DE-AS 1 216 877, 1 219 224, DE-OS 2 131 623, 2 164 482), ebenso Photoinitiatoren vom Typ der 1,2-Diaryl-1,2-dicyano-1,2-dihalogenethane (DE-OS 2 444 252), der 1,2-Diaryl-1,1,2,2-tetracarbalkoxiethane (US 3 896 099) und der 1,2-Diaryl-1,1,2,2-tetramethyl-ethane mit teilweise chlorierten Methylgruppen (BE 834 599).

Es darf wohl angenommen werden, dass Peroxide, die aus dem Angriff von Sauerstoff auf die $\beta,\gamma$-ethylenisch ungesättigten Ethergruppen des Polyesters resultieren, bei der Polymerisation des Polyesters eine wichtige Rolle spielen. Diese – im Gegensatz zu den externen – «internen» Polymerisationsinitiatoren sollen beim erfindungsgemassen Verfahren nicht ausgeschlossen sein.

Das erfindungsgemässe Verfahren vermeidet die bei wässrigen Emulsionen so schwer zu beeinflussenden Verlaufsstörungen des sich bildenden Lackfilmes und gestattet durch das Fehlen verdunstender organischer Lösungsmittel und Monomeren eine angenehmere Anfertigung dünnschichtiger Überzüge. Die Lackfilme besitzen selbst bei Auftragsmengen für Trockenfilm-Schichtdicken von 10 µm ein einwandfreies Fliessverhalten.

Dass die Abwesenheit peroxidischer Initiatoren einen entscheidenden Vorteil in sich birgt, versteht sich von selbst.

Es war aber auch für den Fachmann nicht zu erwarten und überaus überraschend, dass nach dem erfindungsgemässen Verfahren ungesättigte Polyester in Abwesenheit externer Initiatoren innerhalb einer unvorhersehbar kurzen Zeit zu Überzügen mit hervorragenden Eigenschaften gehärtet werden können.

Bevorzugte in Wasser dispergierbare Polyester, im folgenden kurz Polyester a genannt, sind die Polykondensationsprodukte mindestens einer α,β-ethylenisch ungesättigten Dicarbonsäure mit in der Regel 4 oder 5 C-Atomen oder deren esterbildende Derivate (z.B. Anhydride), gegebenenfalls in Abmischung mit bis zu 100 Mol-%, bezogen auf die ungesättigte Säurekomponente, mindestens einer aliphatischen gesättigten Dicarbonsäure mit 4–10 C-Atomen oder einer cycloaliphatischen oder aromatischen Dicarbonsäure mit 8–10 C-Atomen oder deren esterbildende Derivate (z.B. ihren Anhydriden), mit mindestens einer Hydroxyverbindung, vorzugsweise Dihydroxyverbindung bzw. Polyhydroxyverbindung mit 2–8 C-Atomen, deren nicht zur Polykondensation eingesetzten OH-Gruppen mindestens teilweise mit β,γ-ungesättigten Alkoholen verethert sind, also Polyester, wie sie z.B. in der DE-AS 1 024 654 beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure, Itaconsäure oder Chlormaleinsäure. Beispiele für die zu verwendenden aliphatischen gesättigten und cycloaliphatischen und aromatischen Dicarbonsäuren oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Adipinsäure, Sebacinsäure. Um schwerentflammbare Harze herzustellen, können z.B. Hexachlorendomethylentetrahydrophthalsäure, Tetrachlorphthalsäure oder Tetrabromphthalsäure verwendet werden. Als zweiwertige Alkohole können Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis(4-hydroxycyclohexal)-propan, bis-oxalkyliertes Bisphenol A; zur Einführung der β,γ-ethylenisch ungesättigten Ethergruppen bevorzugte Hydroxyverbindungen sind Trimethylolpropanmono- und -diallylether, Glycerinmono- und -diallylether sowie Pentaerythritmono-, -di- und -triallylether.

Die für die Wasserdispergierbarkeit der α,β-ethylenisch ungesättigten Polyester notwendigen Polyalkylen-, vorzugsweise Polyethylenglykolreste, mit Molekulargewichten von 250 bis 2000, können in bekannter Weise entweder durch Mitverwendung von Polyalkylenglykolen als Ausgangsverbindungen bei der Polyesterherstellung oder durch Anlagerung der entsprechenden Alkylenoxide an eine Polyestervorstufe gemäss GB 1 076 319 einkondensiert werden. Zum Erreichen der Wasserdispergierbarkeit des Polyesters können auch Polymischalkylenglykolreste, wie z.B. Poly-ethylen/propylen-glykolreste mit einem Anteil an Propylenoxideinheiten < 50 Mol-%, bezogen auf das Polyethylenpropylenglykol, einkondensiert werden. Bevorzugte Polyalkylenglykole sind solche, bei denen die Ether-Sauerstoffatome jeweils durch mindestens zwei, vorzugsweise zwei bis vier, Kohlenstoffatome getrennt sind. Der für die Wasserdispergierbarkeit notwendige Polyalkylenglykol-Gehalt hängt neben der Natur der anderen Polyesterkomponenten hauptsächlich von Art und Menge gegebenenfalls zusätzlich verwendeter Dispergatoren ab. Im allgemeinen beträgt der Polyalkylenglykol-Gehalt des Polyesters weniger als 25 Gew.-%, vorzugsweise 5–20 Gew.-%, bezogen auf Polyester.

Für die Herstellung des Polyesters b bevorzugte gesättigte aliphatische monofunktionelle Alkohole sind Alkanole, Cycloalkanole und Cycloalkanalkohole, z.B. n-Hexanol, n-Octanol, n-Decanol, Laurol, Stearylalkohol, Hexahydrobenzylalkohol, vorzugsweise verzweigte Alkanole, wie 2-Ethylhexanol-1- und Isononanole. Bevorzugte gesättigte aliphatische Monocarbonsäuren sind n-Octan-, n-Dodecan-, Stearin-, vorzugsweise 2-Ethylhexansäure und Isononansäure. Bevorzugte Polyhydroxyverbindungen sind die oben für die Polyesterherstellung a genannten Diole, z.B. Ethylen-, Diethylenglykol, Propandiol-1,2 und -1,3, Butandiol-1,3 und -1,4, 2-Ethylpropandiol-1,3, Hexandiol-1,6. Höherwertige Polyhydroxyverbindungen sind wegen ihrer verzweigenden Wirkung nur in untergeordneten Mengen verwendbar. «Aliphatisch» in diesem Zusammenhang schliesst «cycloaliphatisch» ein.

Die Säurezahlen der Polyester sollen 1–40, vorzugsweise 10–30, und die OH-Zahlen 10–100, vorzugsweise 20–50, und die als Zahlenmittel bestimmten Molekulargewichte 300– 5000, vorzugsweise 500–2000, betragen.

Um die erfindungsgemässen Emulsionen vor unerwünschter vorzeitiger Polymerisation zu bewahren, empfiehlt es sich, bereits bei der Herstellung der ungesättigten Polyester 0,001–0,1 Gew.-%, bezogen auf Polyester a Polymerisationsinhibitoren oder Antioxidantien zuzusetzen.

Bevorzugte Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1–6 C-Atomen enthalten, Amine, vorzugsweise sekundäre Arylamine und ihre Derivate, Chinone, Kupfersalze organischer Säuren, Anlagerungsverbindungen von Kupfer-(I)-halogeniden an Phosphite; Verbindungen, wie sie auch in «Methoden der organischen Chemie» (Houben-Weyl), 4. Auflage, Band XIV/1, S. 433–452, 756 Georg-Thieme-Verlag, Stuttgart, 1961, beschrieben sind. Sehr gut geeignet sind z.B. Hydrochinon und p-Benzochinon in einer Konzentration von 0,01 bzw. 0,05 Gew.-%, bezogen auf die Komponenten a und b.

Bevorzugte Sperrmittel sind Wachse und vorzugsweise Paraffine mit einem Schmelzpunkt zwischen 35 und 100, vorzugsweise 40–80°C. Sie werden den erfindungsgemäss zu verwendenden Dispersionen vorzugsweise in Form wässriger Dispersionen zugesetzt und verhindern die Inhibierung der Polymerisation durch den Sauerstoff der Luft. Sie werden im allgemeinen in Mengen von 0,05 bis 2 Gew.-%, bezogen auf wässrige Dispersion, eingesetzt.

Normalerweise benötigen die fertigen Lackformulierungen mit Sperrmittelzusatz eine mehrstündige Reifezeit, bis die Härtung in den dafür vorgesehenen Lackierstrassen mit ihren vorgegebenen Taktzeiten durchführbar ist. Jedoch durch Zugabe basischer Verbindungen, vorzugsweise Amine und insbesondere Ammoniak in Mengen von 0,03–1,0 Gew.-%, bezogen auf wässrige Dispersion, kann die Reifezeit vollständig eingespart werden; die Lacke sind sofort verarbeitbar.

Überraschenderweise wird der Fortfall der Reifezeit des Lackes bei gleichzeitiger Reaktivitätssteigerung auch durch Zusatz eines aliphatischen bzw. cycloaliphatischen polyfunktionellen Isocyanats, entsprechend einem Gehalt von 0,005–0,1, vorzugsweise 0,015–0,06 Mol NCO/100 g Polyester, zum Polyester bzw. Polyestergemisch unmittelbar vor dem Dispergieren bewirkt. Als aliphatische bzw. cycloaliphatische Polyisocyanate sind zu nennen; Hexamethylendiisocyanat, 2,2,4- und 2,4,4-Trimethylhexamethylendiisocyanat sowie ihre NCO-gruppenhaltigen Addukte an polyfunktionelle Alkohole und Wasser, Isophorondiisocyanat und 4,4'-Diisoxyanatodicyclohexylmethan.

Verdickungsmittel, erforderlich besonders bei dünnflüssigen Öl-in-Wasser-Emulsionen zur Erzeugung der benötigten Verarbeitungsviskosität der Dispersionen, sind in Karsten, Lackrohstofftabellen, 6. Auflage 1976, Abs. 42.28. «Verdickungsmittel» aufgeführt; bevorzugt sind Cellulosederivate, z.B. Methylcellulose und Verdicker auf Urethanbasis sowie spezielle Montmorillonite. Sie können sowohl dem Polyester bzw. Polyestergemisch oder dem Wasser vor dem Dispergieren zugesetzt als auch nachträglich in die fertige Dispersion zur Nachdickung eingerührt werden.

Die Herstellung der Dispersionen kann durch Einrühren des Wassers in den Polyester bzw. in das Polyestergemisch a und b, z.B. durch einfaches Rühren oder mittels Dissolver, erfolgen. Zur Ausbildung einer feinteiligeren Dispersion, d.h. zur besseren Einbringung der Scherkräfte, ist portionsweiser Wasserzusatz bei Temperaturen unter 30°C vorteilhaft. Es werden sowohl Wasser-in-Öl- als auch Öl-im-Wasser-Dispersionen gebildet.

Der Wassergehalt der Dispersion beträgt in der Regel 20–70 Gew.-%, bezogen auf Dispersion.

Bevorzugte Beschleuniger sind z.B. die Schwermetallsalze von Carbonsäuren oder die Chelate dieser Metalle wie die Acetate, Naphthenate oder Acetylacetonate von Cobalt, Cer, Mangan oder Vanadium. Die Beschleuniger können entweder, falls sie wasserlöslich sind, in Form ihrer wässrigen Lösungen, andernfalls als wässrige Dispersionen zugesetzt werden.

Übliche Mengen, d.h. 0,01–0,2 Gew.-% Sikkativmetall, bezogen auf Polyester bzw. Polyestergemisch a und b, gewährleisten in der Regel eine ausgezeichnete Härtung.

Zum Schutz von lichtempfindlichen Untergründen, z.B. hellen Hölzern, können den Überzugsmassen geringe Mengen der üblichen UV-Absorber zugesetzt werden, z.B. 2-Hydroxy-4-methoxybenzophenon, oder die üblicherweise verwendeten Zimtsäure- und Benzotriazinderivate.

Übliche Zuschlags- und Farbstoffe, Konservierungs-, Mattierungs- und Verlaufsmittel sowie Pigmente können zur Erzielung spezieller Effekte ebenfalls zugesetzt werden, sofern sie die Emulsionstabilität und die Polymerisation nicht wesentlich beeinflussen.

Die Lacke lassen sich durch Walzen und Spritzen nach den bekannten Methoden (Wagner/Sarx, Lackkunstharze, 5. Auflage, Carl Hanser Verlag, Stuttgart 1971, S. 140, 141 und Weigel, Katalytische Lackhärtung und ihre Rohstoffe, Wissenschaftliche Verlagsgesellschaft, 1962, S. 192–202) auftragen.

Das erfindungsgemässe Verfahren eignet sich durch den Fortfall des Potlifes, das normalerweise die Bearbeitungszeit begrenzt oder einen gesonderten Peroxidauftrag erzwingt (Aktivgrundverfahren), hervorragend zur Verarbeitung auf den herkömmlichen Lackierstrassen.

Nach dem erfindungsgemässen Verfahren werden die Polyesterdispersionen in Schichtdicken von 10 bis 250, vorzugsweise 20 bis 150 µm aufgetragen. Zur Trocknung werden im allgemeinen Temperaturen von 20 bis 150, vorzugsweise 40 bis 100°C, angewandt, um die Wasserverdunstung einzuleiten; anschliessend wird bei gleicher oder höherer Temperatur, d.h. von 20 bis 180°C, vorzugsweise 40 bis 160°C, bis zur Stapelfestigkeit gehärtet.

Zur Herstellung der Dispersionen wurden die Polyestermischungen 1 und 2 mittels Dissolver bei 8000 Upm bei Temperaturen bis max. 40°C mit Wasser für einen Festkörpergehalt von 70 Gew.-% emulgiert und anschliessend mit Wasser auf 50 Gew.-% Festkörpergehalt bei 1000 Upm verdünnt (Teilchengrösse ca. 0,5 µm).

Beispiele

| Zu emulgierende Polyester a | Zusammensetzung (Mol) | |
|---|---|---|
| Maleinsäureanhydrid | 1,0 | |
| Propandiol-1,2 | 0,6 | |
| Trimethylolpropandiallylether | 0,95 | |
| Säurezahl | 22 | |
| Viskosität /mPa.s/ bei 20°C | 18000 | |
| Emulgatorpolyester b | $b_1$ | $b_2$ |
| Maleinsäureanhydrid | 1,0 | 1,0 |
| Polyethylenglykol (MG 400) | 0,79 | 0,86 |
| Trimethylolpropandiallylether | 0,4 | — |
| 2-Ethylhexanol-1 | — | 0,47 |
| Säurezahl | 27 | 18 |
| Viskosität [mPas.s], gemessen 70 Gew.-%ig in Styrol bei 20°C | 560 | — |
| Viskosität [mPas.s] bei 20°C | — | 3000 |
| Zusammensetzung der Polyestermischung für die Emulsionen. | | |
| Polyestermischung | 1 | 2 |
| Polyester | | |
| a | 80 | 80 |
| $b_1$ | 20 | — |
| $b_2$ | — | 20 |

In den Lackbeispielen verwendete Sperrmitteldispersion:

10 Gew.-Teile Paraffin ($F_p$ 57–60°C), emulgiert in 90 Gew.-Teilen 6gewichtsprozentiger wässriger Polyvinylalkohollösung (Polyvinylalkohol: Verseifungszahl 140, Viskosität 25 mPas, gemessen als 4gewichtsprozentige wässrige Lösung bei 20°C).

Die erhaltenen Dispersionen wurden zum Vergleich mit und ohne Peroxid ($H_2O_2$) katalysiert, mit wässriger Co-acetatlösung (ca. 5 Gew.-% Co-Gehalt) sikkativiert, nach Zusatz des Sperrmittels in ca. 80 µm Nassfilmstärke auf Glasplatten aufgezogen und bei 50°C mit 2 m/sec Windgeschwindigkeit im Trockentunnel gehärtet.

Wie nachstehende Tabelle zeigt, härten die wässrigen Lackdispersionen sowohl mit (Bei-

| Lackbeispiele | | Angaben in Gewichtsteilen | | | | | | | | | |
|---|---|---|---|---|---|---|---|---|---|---|---|
| | | 1 | 2 | 3 | 4 | 5 | 6 | 7 | 8 | 9 | 10 |
| Emulsion der Polyestermischung | 1 | 100 | 100 | 100 | 100 | 100 | – | – | – | – | – |
| | 2 | – | – | – | – | – | 100 | 100 | 100 | 100 | 100 |
| Sperrmittel dispersion | | 2 | 2 | – | – | 2 | 2 | 2 | – | – | 2 |
| wäsrige Co-acetatlösung (5 Gew.-% Co-Gehalt) | | 2 | 2 | 2 | 2 | 2 | 2 | 2 | 2 | 2 | 2 |
| $H_2O_2$ (35 Gew.-%ige wässrige Lösung) | | 3 | – | – | – | – | 3 | – | – | – | – |
| $NH_3$ (35 Gew.-%ige wässrige Lösung) | | – | – | – | 0,5 | 0,5 | – | – | – | 0,5 | 0,5 |

Lackfilme (Nassfilmstärke 80 µm), getrocknet bei 50°C im Trockentunnel

| | 1 | 2 | 3 | 4 | 5 | 6 | 7 | 8 | 9 | 10 |
|---|---|---|---|---|---|---|---|---|---|---|
| 1. Lackaufzug nach Herstellung Trocknen nach | 20 Min. | 5 Std. | 35 Min. | 22 Min. | 20 Min. | 18 Min. | 4 Std. | 37 Min. | 32 Min. | 33 Min. |
| 2. Lackaufzug nach 24 Std. Lack-Lagerzeit Trocknen nach | 5 Std. | 30 Min. | 18 Min. | 18 Min. | | 4 Std. | 32 Min. | 29 Min. | 29 Min. | |

spiele 1 und 6) als auch ohne Peroxid (Beispiele 3, 4, 5, 8, 9, 10) in ähnlichen Zeiten zu Lackfilmen mit kratzfesten Filmoberflächen aus; lediglich die sperrmittelfreien Lackfilme besitzen trotz Kratzfestigkeit einen kleberartigen Griff (Beispiele 3, 4, 8 und 9).

Der peroxidhaltige Lack übersteht infolge seines potlifes von ca. 15 Std. die Lagerzeit von 24 Std. nicht ungeliert. Bei sperrmittelhaltigem, peroxidfreiem Lack setzt der Härtungsvorgang für technische Anwendung zu langsam ein (Beispiele 2 und 7); jedoch kann diese Härtungsverzögerung durch basische Zusätze, z.B. NH₃, sofort aufgehoben werden (Beispiele 5 und 10).

**Patentansprüche**

1. Verfahren zur Herstellung dünnschichtiger Überzüge aus monomerfreien wässrigen Polyesterdispersionen, die frei von organischen Lösungsmitteln sind, dadurch gekennzeichnet, dass der Polyesterbestandteil der Dispersion aus

a. 50–95 Gew.-%, bezogen auf die Summe von a und b, mindestens eines $\alpha,\beta$-ethylenisch ungesättigten Polyesters, der pro 100 g Polyester a 0,2–0,8 Mol $\beta,\gamma$-ethylenisch ungesättigte Ethergruppen, aber keine einkondensierten Polyalkylenglykolreste mit Molekulargewichten von 250–2000 enthält, und

b. 5–50 Gew.-%, bezogen auf die Summe von a und b, mindestens eines $\alpha,\beta$-ethylenisch ungesättigten Polyesters enthält, der zu 25–90 Gew.-%, bezogen auf b., aus einkondensierten Polyalkylenglykolresten eines Molekulargewichts von 250–2000 besteht und pro 100 g Polyester b i) 0,4–0,5 Mol $\beta,\gamma$-ethylenisch ungesättigte Ethergruppen oder ii) 0,02–0,2 Mol gesättigte aliphatische Endgruppen, die Reste von Monocarbonsäuren und/oder monofunktionellen Alkoholen sind, enthält und dass man in Gegenwart von Beschleunigern, aber in Abwesenheit üblicher externer Polymerisationsinitiatoren polymerisiert.

2. Verfahren nach Anspruch 1, dadurch gekennzeichnet, dass die wässrigen Dispersionen 0,05 bis 2 Gew.-%, bezogen auf wässrige Dispersion, Sperrmittel enthalten.

3. Verfahren nach Anspruch 2, dadurch gekennzeichnet, dass die Reifezeit durch Zusatz von 0,03 bis 1 Gew.-%, bezogen auf wässrige Dispersion, basischer Verbindungen vermieden wird.

4. Verfahren nach Ansprüchen 1 und 2, dadurch gekennzeichnet, dass die wässrige Dispersion zusätzlich mindestens ein polyfunktionelles aliphatisches und/oder cycloaliphatisches Isocyanat entsprechend 0,005 bis 0,1 Mol NCO/100 g Polyester enthält.

5. Verfahren nach Ansprüchen 1–4, dadurch gekennzeichnet, dass man als Dispergator einen zweiten Polyester einsetzt, so dass sich der Polyesterbestandteil der Dispersion aus

a. 50–95 Gew.-%, bezogen auf die Summe von a und b, mindestens eines $\alpha,\beta$-ethylenisch ungesättigten Polyesters, der pro 100 g Polyester a 0,2–0,8 Mol $\beta,\gamma$-ethylenisch ungesättigte Ethergruppen, aber keine einkondensierten Polyalkylenglykolreste eines Molekulargewichts von 250–2000 enthält, und

b. 5–50 Gew.-%, bezogen auf die Summe von a und b, mindestens eines $\alpha,\beta$-ethylenisch ungesättigten Polyesters, der zu 25–90 Gew.-%, bezogen auf b, aus einkondensierten Polyalkylenglykolresten eines Molekulargewichts von 250–2000 besteht und pro 100 g Polyester b 0,02–0,2 Mol gesättigte aliphatische Endgruppen, die Reste von Monocarbonsäuren und/oder monofunktionellen Alkoholen sind, enthält, zusammensetzt.

**Claims**

1. A process for the production of thin-layer coatings of monomer-free aqueous polyester dispersions which are free from organic solvents, characterised in that the polyester component of the dispersion consists of

a. from 50 to 95% by weight, based on the sum of a and b, of at least one $\alpha,\beta$-ethylenically unsaturated polyester which, per 100 g of polyester a, contains from 0.2 to 0.8 mole of $\beta,\gamma$-ethylenically unsaturated ether groups but no co-condensed polyalkylene glycol residues having molecular weights of from 250 to 2000, and

b. from 5 to 50% by weight, based on the sum of a and b, of at least one $\alpha,\beta$-ethylenically unsaturated polyester of which from 25 to 90% by weight, based on b, consists of co-condensed polyalkylene glycol residues having a molecular weight of from 250 to 2000 and which, per 100 g of polyester b, contains i) from 0.4 to 0.5 mole of $\beta,\gamma$-ethylenically unsaturated ether groups or ii) from 0.02 to 0.2 mole of saturated aliphatic terminal groups which are residues of monocarboxylic acids and/or monofunctional alcohols, and in that polymerisation is carried out in the presence of accelerators but in the absence of standard external polymerisation initiators.

2. A process as claimed in Claim 1, characterised in that the aqueous dispersions contain from 0.05 to 2% by weight, based on the aqueous dispersion, of sealing agents.

3. A process as claimed in Claim 2, characterised in that the ripening time is avoided by the addition of from 0.03 to 1% by weight, based on aqueous dispersion, of basic compounds.

4. A process as claimed in Claims 1 and 2, characterised in that the aqueous dispersion additionally contains at least one polyfunctional aliphatic and/or cycloaliphatic isocyanate corresponding to 0.005 to 0.1 mole of NCO per 100 g of polyester.

5. A process as claimed in Claims 1 to 4, characterised in that the dispersant used is a second polyester so that the polyester component of the dispersion consists of

a. from 50 to 95% by weight, based on the sum of a and b, of at least one $\alpha,\beta$-ethylenically unsaturated polyester which, per 100 g of polyester a, contains from 0.2 to 0.8 mole of $\beta,\gamma$-ethylenically

unsaturated ether groups, but no co-condensed polyalkylene glycol residues having a molecular weight of from 250 to 2000 and

b. from 5 to 50% by weight, based on the sum of a and b, of at least one α,β-ethylenically unsaturated polyester of which from 25 to 90% by weight, based on b, consists of co-condensed polyalkylene glycol residues having a molecular weight in the range from 250 to 2000 and which, per 100 g of polyester b, contains from 0.02 to 0.2 mole of saturated aliphatic terminal groups which are residues of monocarboxylic acids and/or monofunctional alcohols.

## Revendications

1. Procédé de fabrication d'enduits en couche mince à partir de dispersions aqueuses de polyesters exemptes de monomères qui sont exemptes de solvants organiques, caractérisé en ce que le constituant polyester de la dispersion consiste en

a. 50–95% en poids, par rapport à la somme de a et de b, d'au moins un polyester α,β-éthyléniquement insaturé qui contient par 100 g de polyester a 0,2 à 0,8 mole de groupes éthers β,γ-éthyléniquement insaturés mais pas de radicaux de polyalcoylène glycols incorporés par condensation qui ont des poids moléculaires de 250 à 2000 et qui contient

b. 5 à 50% en poids, par rapport à la somme de a et de b, d'au moins un polyester α,β-éthyléniquement insaturé qui consiste en 25 à 90% en poids, par rapport à b, en des radicaux de polyalcoylène glycols incorporés par condensation d'un poids moléculaire de 250 à 2000 et qui contient, par 100 g du polyester b: i) 0,4–0,5 mole de groupes éthers β,γ-éthyléniquement insaturés ou ii) 0,02 à 0,2 mole de groupes terminaux aliphatiques saturés qui sont des radicaux d'acides monocarboxyliques et/ou d'alcools monofonctionnels, et en ce qu'on polymérise en présence d'accélérateurs mais en l'absence des initiateurs de polymérisation externes usuels.

2. Procédé selon la revendication 1, caractérisé en ce que les dispersions aqueuses contiennent 0,05 à 2% en poids, par rapport à la dispersion aqueuse, d'un agent de barrage.

3. Procédé selon la revendication 2, caractérisé en ce que le temps de mûrissement est supprimé par l'addition de 0,03 à 1% en poids, par rapport à la dispersion aqueuse, de composés basiques.

4. Procédé selon les revendications 1 et 2, caractérisé en ce que la dispersion aqueuse contient supplémentairement au moins un isocyanate aliphatique et/ou cycloaliphatique polyfonctionnel à raison de 0,005 à 0,1 mole de NCO/100 g de polyester.

5. Procédé selon les revendications 1 à 4, caractérisé en ce qu'en tant que dispersant on utilise un second polyester, en sorte que le constituant polyester de la dispersion se compose de

a. 50–95% en poids, par rapport à la somme de a et de b, d'au moins un polyester α,β-éthyléniquement insaturé qui contient par 100 g de polyester a 0,2–0,8 mole de groupes éthers β,γ-éthyléniquement insaturés mais pas de radicaux polyalcoylène glycols incorporés par condensation d'un poids moléculaire de 250–2000, et de

b. 5–50% en poids, par rapport à la somme de a et de b, d'au moins un polyester α,β-éthyléniquement insaturé qui consiste à raison de 25–90% en poids, par rapport à b, en des radicaux polyalcoylène glycol incorporés par condensation d'un poids moléculaire de 250–2000 et qui contient, par 100 g de polyester b, 0,02–0,2 mole de groupes terminaux aliphatiques saturés qui sont des radicaux d'acides monocarboxyliques et/ou d'alcools monofonctionnels.